# FASCICULE DE BREVET EUROPEEN

(11) **EP 3 787 959 B1**
(45) Date de publication et mention de la délivrance du brevet: **30.03.2022**
(21) Numéro de dépôt: 19729332.7
(22) Date de dépôt: 19.04.2019
(51) Int. Cl.: B62D 25/20, B62D 21/15

(54) **STRUCTURE DE VEHICULE AUTOMOBILE AVEC SUPPORT DE RALLONGE DE PLANCHER ARRIERE POUR CHOC FRONTAL**
KRAFTFAHRZEUGSTRUKTUR MIT HINTEREM BODENVERLÄNGERUNGSTRÄGER FÜR FRONTALAUFPRALL
MOTOR VEHICLE STRUCTURE WITH REAR FLOOR EXTENSION SUPPORT FOR FRONTAL IMPACT

(30) Priorité: 03.05.2018 FR 1853811
(43) Date de publication de la demande: 10.03.2021
(73) Titulaire: PSA Automobiles SA, 78300 Poissy (FR)
(72) Inventeur: BENANE, Said, 94240 L'Hay les Roses (FR)
(86) Numéro de dépôt international: PCT/FR2019/050947
(87) Numéro de publication internationale: WO 2019/211545

(56) Documents cités:
- FR-A1- 3 044 283
- JP-A- 2014 162 419
- JP-U- H02 100 881

## Description

L'invention a trait au domaine des véhicules automobiles, plus particulièrement au domaine des caisses de véhicule automobile.

Le document de brevet publié FR 3 044 283 A1 divulgue une structure de caisse de véhicule automobile comprenant un plancher d'habitacle avec un tunnel central, un plancher arrière de chargement surélevé par rapport au plancher avant et un plancher intermédiaire reliant le plancher avant et le plancher arrière. La structure comprend également une rallonge de plancher arrière s'étendant vers l'avant depuis le plancher arrière. Un support de la rallonge de plancher arrière est disposé entre la rallonge de plancher arrière et le tunnel central.

En cas de choc frontal, la partie arrière du véhicule subit un mouvement abrupt dirigé vers le haut. En présence de charges importantes, le plancher arrière, supportant ces charges, peut alors être soumis à des efforts importants et, partant, des déformations susceptibles d'endommager la structure du véhicule. Ceci est particulièrement vrai pour la rallonge de plancher qui est en partie en porte-à-faux au-dessus du plancher de l'habitacle.

L'invention a pour objectif de pallier au moins un des inconvénients de l'état de la technique susmentionné. Plus particulièrement, l'invention a pour objectif de proposer une solution aux déformations potentielles de plancher de chargement pour des véhicules pourvus d'une rallonge de plancher arrière, en cas de choc frontal. L'invention a également pour objectif une solution simple, robuste et économique.

L'invention a pour objet une structure de caisse de véhicule automobile, comprenant un plancher d'habitacle avec un tunnel central ; un plancher arrière de chargement, surélevé par rapport au plancher d'habitacle ; une rallonge de plancher arrière s'étendant vers l'avant depuis ledit plancher et au-dessus du plancher d'habitacle ; un support de rallonge de plancher arrière, disposé entre ladite rallonge et le tunnel central ; remarquable en ce que le support de rallonge de plancher arrière est configuré pour subir une déformation verticale en cas de choc frontal sur le véhicule.

Selon un mode avantageux de l'invention, le support de rallonge de plancher arrière est un embouti avec des zones d'amorce de déformation verticale.

Selon un mode avantageux de l'invention, les zones d'amorce de déformation verticale comprennent un ou plusieurs ajours.

Selon un mode avantageux de l'invention, les zones d'amorce de déformation verticale comprennent une ou plusieurs nervures horizontales.

Selon un mode avantageux de l'invention, le support de rallonge de plancher arrière est un embouti de section en U comprenant une partie centrale, en appui sur une face supérieure du tunnel central et deux parties latérales s'étendant vers l'arrière et en appui sur deux faces latérales du tunnel central, respectivement.

Selon un mode avantageux de l'invention, l'au moins un ajour est un ajour oblong horizontal sur la partie centrale du support de rallonge.

Selon un mode avantageux de l'invention, la ou les nervures horizontales sont présentes sur au moins une des parties latérales du support de rallonge de plancher arrière et s'étendent chacune depuis ladite partie latérale correspondante jusque sur la partie centrale du support de rallonge de plancher arrière.

Selon un mode avantageux de l'invention, chacune des parties latérales du support de rallonge du plancher arrière comprend une patte de fixation à une des faces latérales du tunnel central.

Selon un mode avantageux de l'invention, la partie centrale du support de rallonge de plancher arrière présente un profil en équerre avec une première portion verticale à distance de la face inférieure de la rallonge de plancher et une deuxième portion horizontale s'étendant vers l'avant et en appui sur une face supérieure du tunnel central.

Selon un mode avantageux de l'invention, chacune des parties latérales du support de rallonge du plancher arrière comprend une patte de fixation à une des faces latérales du tunnel central.

Les mesures de l'invention sont intéressantes en ce que le support de rallonge de plancher arrière est configuré pour subir une déformation verticale en cas de choc frontal sur le véhicule. Ainsi, en cas de choc frontal, le support de rallonge absorbe le choc en se déformant verticalement, diminuant la rigidité de la rallonge de plancher arrière et limitant, voire empêchant, une déformation de la structure. L'invention permet ainsi de diminuer les réparations sur la rallonge de plancher arrière et donc sur la structure du véhicule automobile. L'invention est également intéressante entre ce qu'elle est simple à mettre en œuvre et peu coûteuse.

D'autres caractéristiques et avantages de la présente invention seront mieux compris à l'aide de la description et des dessins parmi lesquels :
- La figure 1 représente une caisse de véhicule automobile avec une structure de caisse selon l'invention ;
- La figure 2 illustre la structure de caisse de véhicule automobile de la figure 1 ;
- La figure 3 représente une portion de la structure de caisse des figures 1 et 2 ;
- La figure 4 représente une coupe de la portion de la structure de caisse illustrée aux figures 1 à 3 ;
- La figure 5 illustre une rallonge de plancher arrière et un support de ladite rallonge de plancher arrière de la structure de caisse représentée aux figures 3 et 4 ;

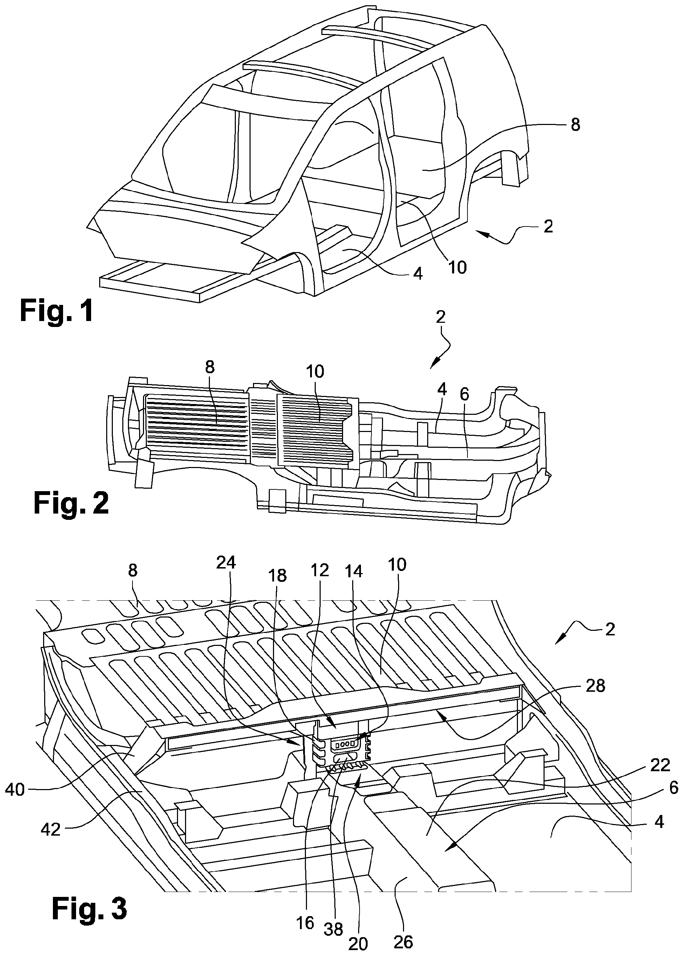

Pour une meilleure compréhension de l'invention, les figures 1 à 5 seront décrites ensemble.

Dans la suite, les notions « avant » et « arrière » sont en relation avec le sens de marche normal du véhicule automobile.

La structure de caisse 2 comprend un plancher d'habitacle 4 avec un tunnel central 6. La structure 2 comprend également un plancher arrière de chargement 8 surélevé par rapport au plancher d'habitacle 4. Une rallonge 10 de plancher arrière s'étend vers l'avant depuis le plancher arrière de chargement 8 et au-dessus du plancher d'habitable 4. Un support 12 de la rallonge de plancher arrière est disposé entre ladite rallonge 10 de plancher arrière et le tunnel central 6.

En raison de la rigidité de la rallonge de plancher arrière, un choc et particulièrement un choc frontal sur le véhicule peut entrainer une déformation de la rallonge 10 de plancher arrière et du tunnel central 6. Il peut alors être nécessaire de changer la rallonge de plancher arrière et devoir redresser le tunnel central. Pour pallier ce problème, le support 12 de plancher arrière est configuré pour subir une déformation verticale en cas de choc frontal sur le véhicule.

Le support 12 de la rallonge de plancher arrière est un embouti avec des zones d'amorce 14 de déformation verticale. Les zones d'amorces 14 de déformation verticale peuvent comprendre un ou plusieurs ajours 16 et/ou une ou plusieurs nervures horizontales 18.

Selon un mode de réalisation de l'invention, le support 12 de rallonge est un embouti de section en U comprenant une partie centrale 20 sur une face supérieure 22 du tunnel central 6 et deux parties latérales 24 s'étendant vers l'arrière et en appui chacune sur une face latérale 26 du tunnel central 6.

Chacune des parties latérales 24 du support 12 de rallonge 10 de plancher arrière est en contact avec une face inférieure 28 de ladite rallonge 10 de plancher arrière et la partie centrale 20 est à distance de ladite face inférieure 28 de la rallonge.

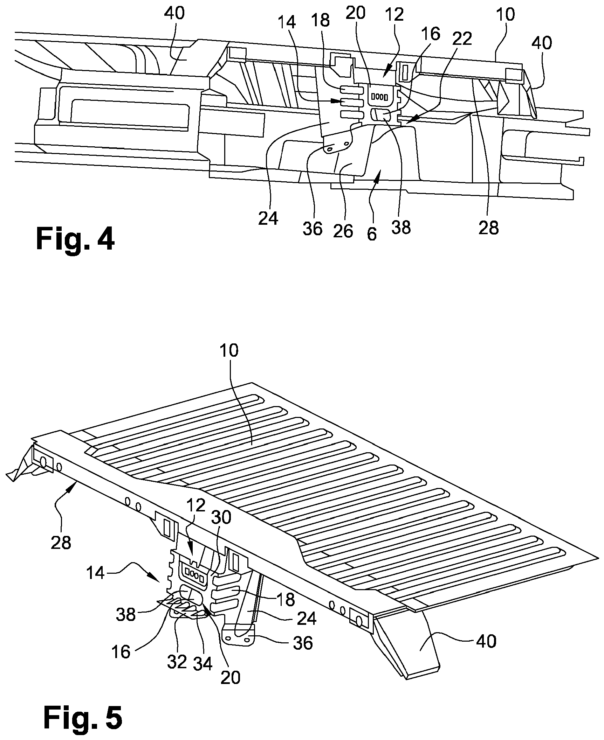

La partie centrale 20 du support 12 de rallonge de plancher arrière présente un profil en équerre avec une première portion verticale 30 à distance de la face inférieure 28 de la rallonge 10 de plancher et une deuxième portion horizontale 32 (Figure 5) s'étendant vers l'avant et en appui sur la face supérieure 22 du tunnel central 6. La partie centrale 20 comprend au moins un élément de contrefort 34 entre la première portion verticale 30 et la deuxième portion horizontale 32.

Chacune des parties latérales 24 du support 12 de rallonge du plancher arrière comprend une patte de fixation 36 à une des faces latérales 26 du tunnel central 6.

Le ou au moins un des ajours 16 est un ajour oblong horizontal 38 sur la partie centrale 20 du support 12.

La ou les nervures horizontales 18 sont présentes sur au moins une des parties latérales 24 du support 12 de rallonge de plancher arrière et s'étendent chacune depuis la partie latérale 24 correspondante jusque sur la partie centrale 20 du support 12 de rallonge de plancher arrière. Dans un mode de réalisation préféré, chacune des parties latérales 24 du support 12 comprend une pluralité de nervures horizontales 18. Les nervures horizontales 18 s'étendent chacune horizontalement sur au moins la moitié de chacune des parties latérales 24 du support 12.

Les nervures horizontales 18 et les ajours 16 vont permettre d'amorcer la déformation verticale du support 12 de rallonge de plancher arrière lors d'un choc frontal sur le véhicule.

La rallonge 10 de plancher arrière peut comprendre, vers l'avant, deux bras latéraux 40 en appui chacun sur un longeron latéral 42 de la structure de caisse de véhicule automobile. Les bras latéraux assurent une stabilité de la rallonge de plancher arrière en cas de choc.

## Revendications

1. Structure (2) de caisse de véhicule automobile, comprenant :
- un plancher d'habitacle (4) avec un tunnel central (6);
- un plancher arrière (8) de chargement, surélevé par rapport au plancher d'habitacle (4) ;
- une rallonge (10) de plancher arrière s'étendant vers l'avant depuis ledit plancher arrière et au-dessus du plancher d'habitacle (4) ;
- un support (12) de rallonge de plancher arrière, disposé entre ladite rallonge (10) et le tunnel central (6) ;
**caractérisée en ce que** le support (12) de rallonge (10) de plancher arrière est configuré pour subir une déformation verticale en cas de choc frontal sur le véhicule.

2. Structure (2) selon la revendication 1, **caractérisée en ce que** le support (12) de rallonge (10) de plancher arrière est un embouti avec des zones d'amorce de déformation verticale (14).

3. Structure (2) selon la revendication 2, **caractérisée en ce que** les zones d'amorce de déformation verticale (14) comprennent un ou plusieurs ajours (16).

4. Structure (2) selon l'une des revendications 2 et 3, **caractérisée en ce que** les zones d'amorce de déformation verticale (14) comprennent une ou plusieurs nervures horizontales (18).

5. Structure (2) selon l'une des revendications 1 à 4, **caractérisée en ce que** le support (12) de rallonge (10) de plancher arrière est un embouti de section en U comprenant une partie centrale (20), en appui sur une face supérieure (22) du tunnel central (6) et deux parties latérales (24) s'étendant vers l'arrière et en appui sur deux faces latérales (26) du tunnel central (6), respectivement.

6. Structure (2) selon l'une des revendications 3 et 4 et selon la revendication 5, **caractérisée en ce que** l'au moins un ajour (16) est un ajour oblong horizontal (38) sur la partie centrale (20) du support (12) de rallonge.

7. Structure (2) selon la revendication 4 et selon l'une des revendications 5 et 6, **caractérisée en ce que** la ou les nervures horizontales (18) sont présentes sur au moins une des parties latérales (24) du support (12) de rallonge de plancher arrière et s'étendent chacune depuis ladite partie latérale (24) correspondante jusque sur la partie centrale (20) du support (12) de rallonge de plancher arrière.

8. Structure (2) selon l'une des revendication 5 à 7, **caractérisée en ce que** chacune des parties latérales (24) du support (12) de rallonge est en contact avec une face inférieure (28) de la rallonge (10) de plancher arrière, la partie centrale (20) étant distance de ladite face inférieure (28) de la rallonge (10) de plancher arrière.

9. Structure (2) selon l'une des revendications 5 à 8, **caractérisée en ce que** la partie centrale (20) du support (10) de rallonge de plancher arrière présente un profil en équerre avec une première portion verticale (30) à distance de la face inférieure (28) de la rallonge (10) de plancher et une deuxième portion horizontale (32) s'étendant vers l'avant et en appui sur une face supérieure (22) du tunnel central (6).

10. Structure (2) selon l'une des revendication 5 à 9, **caractérisée en ce que** chacune des parties latérales (24) du support (12) de rallonge du plancher arrière comprend une patte de fixation (36) à une des faces latérales (26) du tunnel central (6).

## Patentansprüche

1. Kraftfahrzeugkarosserie (2) mit:
- einen Innenraumboden (4) mit einem Mitteltunnel (6);
- einen gegenüber dem Innenraumboden (4) erhöhten hinteren Ladeboden (8);
- ein Heckbodenansatz (10), der sich von dem Heckboden nach vorne und über dem Innenraumboden (4) erstreckt;
- ein zwischen dem Verlängerungsstück (10) und dem Mitteltunnel (6) angeordneter hinterer Bodenverlängerungsträger (12);
**dadurch gekennzeichnet, dass** der Träger (12) für den Heckbodenansatz (10) so ausgebildet ist, dass er bei einem Frontalaufprall auf das Fahrzeug vertikal verformt wird.

2. Struktur (2) nach Anspruch 1, **dadurch gekennzeichnet, dass** der Träger (12) für die Verlängerung (10) des hinteren Bodens ein Stempel mit vertikalen Verformungsstartzonen (14) ist.

3. Struktur (2) nach Anspruch 2, **dadurch gekennzeichnet, dass** die vertikalen Verformungsstartzonen (14) einen oder mehrere Durchbrüche (16) umfassen.

4. Struktur (2) nach einem der Ansprüche 2 und 3, **dadurch gekennzeichnet, dass** die vertikalen Verformungsstartzonen (14) eine oder mehrere horizontale Rippen (18) umfassen.

5. Struktur (2) nach einem der Ansprüche 1 bis 4, **dadurch gekennzeichnet, dass** der Träger (12) für die Verlängerung (10) des hinteren Bodens ein Anschlag mit U-förmigem Querschnitt ist, der einen zentralen Teil (20) umfasst, der an einer Oberseite (22) des zentralen Tunnels (6) anliegt, und zwei seitliche Teile (24), die sich nach hinten erstrecken und an zwei Seitenflächen (26) des zentralen Tunnels (6) anliegen.

6. Struktur (2) nach einem der Ansprüche 3 und 4 und nach Anspruch 5, **dadurch gekennzeichnet, dass** der mindestens eine Durchbruch (16) ein länglicher horizontaler Durchbruch (38) auf dem zentralen Teil (20) des Verlängerungsträgers (12) ist.

7. Struktur (2) nach Anspruch 4 und nach einem der Ansprüche 5 und 6, **dadurch gekennzeichnet, dass** die horizontale(n) Rippe(n) (18) auf mindestens einem der Seitenteile (24) des hinteren Bodenverlängerungsträgers (12) vorhanden sind und sich jeweils von dem entsprechenden Seitenteil (24) bis zum Mittelteil (20) des hinteren Bodenverlängerungsträgers (12) erstrecken.

8. Struktur (2) nach einem der Ansprüche 5 bis 7, **dadurch gekennzeichnet, dass** jedes der Seitenteile (24) des Verlängerungsträgers (12) mit einer Unterseite (28) des Hinterbodenverlängerungsstücks (10) in Kontakt steht, wobei das Mittelteil (20) von der Unterseite (28) des Hinterbodenverlängerungsstücks (10) beabstandet ist.

9. Struktur (2) nach einem der Ansprüche 5 bis 8, **dadurch gekennzeichnet, dass** der zentrale Teil (20) des hinteren Bodenverlängerungsträgers (10) ein rechtwinkliges Profil mit einem ersten vertikalen Abschnitt (30), der von der Unterseite (28) des Bodenverlängerungsstücks (10) beabstandet ist, und einem zweiten horizontalen Abschnitt (32) aufweist, der sich nach vorne erstreckt und auf einer Oberseite (22) des zentralen Tunnels (6) aufliegt.

10. Struktur (2) nach einem der Ansprüche 5 bis 9, **dadurch gekennzeichnet, dass** jeder der Seitenteile (24) des Verlängerungsträgers (12) des hinteren Bodens eine Befestigungslasche (36) an einer der Seitenflächen (26) des zentralen Tunnels (6) umfasst.

## Claims

1. Body structure (2) of a motor vehicle, comprising:
- a passenger compartment floor (4) with a central tunnel (6);
- a rear loading floor (8), raised above the passenger floor (4);
- a rear floor extension (10) extending forward from the rear floor and above the passenger compartment floor (4);
- a rear floor extension bracket (12) is disposed between the floor extension (10) and the central tunnel (6);
**characterized in that** the rear floor extension support (12) (10) is configured to undergo vertical deformation in the event of a frontal impact on the vehicle.

2. Structure (2) according to Claim 1, **characterized in that** the rear-floor extension support (12) is a stamping with vertical deformation initiation zones (14).

3. Structure (2) according to claim 2, **characterized in that** the vertical deformation initiation zones (14) comprise one or more apertures (16).

4. Structure (2) according to one of Claims 2 and 3, **characterized in that** the vertical deformation initiation zones (14) comprise one or more horizontal ribs (18).

5. Structure (2) according to one of Claims 1 to 4, **characterized in that** the rear-floor extension support (12) is a U-shaped cross-sectional press comprising a central part (20), bearing on an upper face (22) of the central tunnel (6) and two lateral parts (24) extending rearwardly and bearing on two lateral faces (26) of the central tunnel (6), respectively.

6. Structure (2) according to one of Claims 3 and 4 and according to Claim 5, **characterized in that** the at least one aperture (16) is a horizontal oblong aperture (38) on the central part (20) of the extension support (12).

7. Structure (2) according to claim 4 and according to one of claims 5 and 6, **characterized in that** the horizontal rib or ribs (18) are present on at least one of the lateral parts (24) of the rear floor extension support (12) and each extend from the corresponding lateral part (24) as far as the central part (20) of the rear floor extension support (12).

8. Structure (2) according to one of Claims 5 to 7, **characterized in that** each of the lateral parts (24) of the extension support (12) is in contact with a lower face (28) of the rear floor extension (10), the central part (20) being at a distance from said lower face (28) of the rear floor extension (10).

9. Structure (2) according to one of Claims 5 to 8, **characterized in that** the central part (20) of the rear floor extension support (10) has a profile at right angles with a first vertical portion (30) remote from the lower face (28) of the floor extension (10) and a second horizontal portion (32) extending forwards and bearing on an upper face (22) of the central tunnel (6).

10. Structure (2) according to one of Claims 5 to 9, **characterized in that** each of the lateral parts (24) of the rear-floor extension support (12) comprises a lug (36) for fixing to one of the lateral faces (26) of the central tunnel (6).
